# EUROPÄISCHE PATENTSCHRIFT

(11) **EP 0 435 846 B1**
(45) Veröffentlichungstag und Bekanntmachung des Hinweises auf die Patenterteilung: **22.06.1994**
(21) Anmeldenummer: 90890326.3
(22) Anmeldetag: 17.12.1990
(51) Int. Cl.: C05F 3/00, C05F 15/00

(54) **Verfahren zum Herstellen von hochwertigem Dünger aus Pansenmist**
Process for producing a high-grade fertilizer from rumen contents
Procédé de préparation d'engrais à partir de contenu de rumen de haute qualité

(30) Priorität: 18.12.1989 AT 2863/89
(43) Veröffentlichungstag der Anmeldung: 03.07.1991
(73) Patentinhaber: Penzenstadler, Robert, A-4943 Geinberg (AT)
(72) Erfinder: Penzenstadler, Robert, A-4943 Geinberg (AT)
(74) Vertreter: Hübscher, Heiner, Dipl.-Ing.

(56) Entgegenhaltungen:
- GB-A- 736 785
- ALTERNATIVE WASTE TREATMENT SYSTEMS, 1988, Seiten 174-184, Elsevier Applied Science Publishers Ltd, Barking, Essex, GB; A.J. VAN OOSTROM et al.: "Temperature-controlled, aerated static-pile composting of slaughterhouse waste solids"

## Beschreibung

Die Erfindung betrifft ein Verfahren nach dem Oberbegriff des Patentanspruches 1.

Pansenmist, der, wie der Name sagt, aus dem Pansenmagen von Widerkäuern stammt, fällt in Schlachthöfen in gröberen Mengen an. Seine Konsistenz und Zusammensetzung bedingen bei normaler Ablagerung eine Fäulnisbildung unter teilweise anaerober Gärung, wobei eine starke Belästigung durch üble Gerüche auftritt und die Zersetzung nur langsam vor sich geht. Die schließlich nach der Zersetzung, die Jahre dauern kann, verbleibenden Rückstände haben keinen wirtschaftlichen Wert. Es ist deshalb meist üblich, den anfallenden Pansenmist zu pressen, in Container zu verladen und auf Deponien abzusetzen, wobei hier sogar durch die Fäulnis Gefährdungen der Umwelt auftreten können.

Es hat nicht an Versuchen gefehlt, Verfahren zu schaffen, nach denen aus dem Pansenmist brauchbarer Dünger gewonnen werden kann, doch sind die bekannten Verfahren äußerst aufwendig und langwierig, so daß sich ihr Einsatz kaum aus wirtschaftlichen Gründen, sondern eher nur aus Gründen des Umweltschutzes zur Vermeidung der Ablagerung des Pansenmistes auf Deponien rechtfertigt.

Ein Verfahren der gegenständlichen Art ist aus ALTERNATIVE WASTE TREATMENT SYSTEMS, 1988, Seiten 174-184, Elsevier Applied Science Publieshers Ltd, Barking, Essex, GB; A.J. VAN OOSTROM et al.: "Temperature-controlled, aerated staticpile composting of slaughterhouse waste solids" bekannt. Bei diesem bekannten Verfahren werden Pansenmist und andere Schlachthausabfälle zunächst auf äußerst kleine Teilchen bis zur Faserform zerkleinert, wobei das Material durch ein Sieb mit 0,75 mm Maschenweite gepreßt wird, so daß eine breiige Substanz entsteht. Dieser Brei wird im Verhältnis 2:1 mit einem organischen Material, nämlich Sägemehl und Rindengranulat mit einer Teilchengröße unter 12 mm innig vermischt. Nach einer Variante wird ein Teil dieses organischen Materials durch Bimssand ersetzt. Diese Mischung wird über einer Belüftungsbasis in Form einer Miete von z. B. 2,2 m Höhe, 5 m Breite und 7,5 m Länge angebracht. Die Belüftungsbasis besteht aus einem perforierten Schlauch der in grobe Rindenschnitzel eingebettet und über ein Zentrifugalgebläse mit einer Leistung von z. B. 1,5 kW mit Druckluft beschickt wird. An vielen Stellen der Miete werden Temperaturfühler angebracht. Das Gebläse wird wenigstens 30 Tage lang betrieben. Erreicht die Temperatur wenigstens 45 °C dann wird das Gebläse eingeschaltet. In der Praxis ergibt sich, daß während der ersten Woche der Kompostierung praktisch eine Dauerbelüftung stattfindet, wogegen in der Folge dann, wenn die Grenztemperaturen nicht überschritten werden, nur eine periodische Belüftung von 2 Minuten Länge zu jeder Viertelstunde vorgenommen wird. Nach Ablauf dieser Zeit wird das Material umgesetzt und zum Teil in einer Hammermühle zerkleinert, wonach eine Nachrotte über drei Monate stattfindet.

Ein Verfahren der gegenständlichen Art ist aus der DE-PS 923 791 bekannt. Es handelt sich dabei um ein mehrstufiges Verfahren, bei dem in jeder einzelnen Verfahrensstufe mit anderen Vorrichtungen und unter anderen Verfahrensbedingen gearbeitet werden muß und in jeder Verfahrensstufe eine Vielzahl von Behandlungsschritten notwendig wird. Zunächst wird nach diesem bekannten Verfahren der Pansenmist bis in die Nähe der Trocknung ausgepreßt, wobei z. B. aus 150 kg Pansenmist 66 kg Trockenprodukt hergestellt werden. Zu diesem getrockneten Pansenmist, dessen Anteil an der Trockenmasse schließlich unter 20 Gew. % beträgt, wird eine größere Menge an aus frischem Gras ebenfalls durch Pressung gewonnenem Trockenprodukt, eine etwa gleich große Menge zerkleinertes Stroh, eine größere Menge an trockener Erde, eine etwa gleich große Menge wie die Trockenmasse des Pansenmistes Phosphat und zusätzliche Mengen von etwas 25 Gew. % des Pansentrockenproduktes Kalisalz und Stärke beigegeben. Die ausgepreßten im wesentlichen trockenen, aus dem Pansenmist und dem Gras erhaltenen Substanzen werden mehrere Tage, in kalten, dunklen Kammern einer Alterung unterzogen, dann mit den übrigen trockenen Zutaten vermischt, wonach endlich die vorher ausgepreßten Flüssigkeiten aus dem Pansenmist und dem Gras zugeführt werden, wobei auch noch Jauche und aktive Fäkalien von Widerkäuern zugegeben werden. Die Erde wird vor der Beimischung sterilisiert. Nach der Flüssigkeitszugabe kommt es zu einer Erwärmung und schließlich zur Abkühlung. Dann werden weitere Spurenelemente beigegeben, wonach das Produkt geknetete, getrocknet und gelüftet wird. Erst dann ist es für den Gebrauch bereit.

Bei einem anderen bekannten Verfahren werden eigens gezüchtete Würmer eingesetzt, die in der Lage sind, den Pansenmist zu verarbeiten. Dabei wird der Pansenmist zerkleinert und in dünner Schicht auf großflächigen Ablagerungsstätten aufgebracht, auf denen die Würmer gezogen werden. Die Ausscheidungen der Würmer werden gesammelt und bilden den weiter verwertbaren Dünger. Es müssen günstige Lebensbedingungen für die Würmer geschaffen werden, die lichtempfindlich sind und nur in einem relativ engen Temperaturbereich gedeihen.

Aufgabe der Erfindung ist demnach die Schaffung eines Verfahrens nach dem aus Pansenmist hochwertiger Dünger bei vertretbarem Anlagen- und Maschineneinsatz sowie innerhalb von für die Praxis brauchbaren Zeiträumen hergestellt werden kann.

Die gestellte Aufgabe wird durch die im Patentanspruch 1 angegebenen Verfahrensmerkmale gelöst.

Eine Kompostierung unter Mischung verschiedener organischer Materialien ist an und für sich bekannt. Durch die Erfindung wurde aber eine Mischung gefunden, die mit einfachen Mitteln die Kompostierung von Pansenmist unter Gewinnung eines hochwertigen Düngers gestattet. Durch die besondere Mischung wird es möglich, den Pansenmist so aufzubereiten, daß in den Mieten eine aerobe Gärung bzw. Zersetzung unter entsprechender Temperaturentwicklung und Abscheidung des überschüssigen Wassers stattfindet, wobei die Vorbereitung der Kompostierung einen vergleichsweise geringen Arbeits- und Zeitaufwand benötigt. Es ist anzunehmen, daß durch das organische Material und den Sand ein Rohgefüge erhalten wird, daß die für den Luftzutritt wirksame Fläche der Mischung sehr stark vergrößert und auch den Luft- und Gasaustausch aus dem Inneren der gebildeten Mieten zuläßt. Ein weiterer entscheidender Vorteil besteht darin, daß billige Zuschlagstoffe bzw. sogar Abfallprodukte als Zuschlagstoffe eingesetzt werden können. Der Schlämm- oder Flußsand fällt beim Waschen von Kies und Sand in entsprechenden Gewinnungsanlagen als Abfallprodukt an, das sonst als unbrauchbar in Deponien abgelagert wird. Es handelt sich hier um Sand mit Korngrößen unter 1 mm, wobei die Korngrößen bis zu einer mehligen Beschaffenheit reichen. Im Schlämmsand sind anderseits organische Rückstände enthalten, die wie die Erfahrung gezeigt hat, die Kompostierung des Pansenmistes begünstigen. Um die Kompostierung zu beschleunigen bzw. den fertigen Dünger zu verbessern, kann man dem Sand Steinmehl zusetzen, wobei in der Praxis Zugaben in der Größenordnung von 10 bis 20 Vol. % bezogen auf die Sandmenge üblich sind. Durch Wiedereinsatz der Grobanteile des Rohkompostes bei einer neuerlichen Kompostierung wird erreicht, daß vom Beginn dieser neuen Kompostierung an in der Miete genügend vermehrungsfähige Klein- und Kleinstlebewesen, insbesondere Mikroben, enthalten sind, um ein rasches Einsetzen der Gärung bzw. Kompostierung zu gewährleisten. Die Aussiebung der Grobbestandteile kann mit einem eine Maschenweite von etwa 2 cm aufweisenden Sieb vorgenommen werden.

Die Angaben über die Volumsverhältnisse bei der Mischung des Pansenmistes mit Sand und verrottbarem organischem Material schwanken deshalb, weil beim Pansenmist von Haus aus Schwankungen des Feuchtigkeitsgehaltes auftreten, aber auch die Möglichkeit besteht, den Feuchtigkeitsgehalt durch Auspressen oder einfach dadurch, daß man die Flüssigkeit abtropfen läßt, zu verringern. Ein Auspressen bis zum Trocknen, wie bei dem bekannten Verfahren, ist nicht vorgesehen. Man wird den Feuchtigkeitsgehalt lediglich bis auf etwa 60 Vol. % vor der Mischung mit den Zuschlagstoffen verringern. Dabei ist aber auch der Einsatz von frischem Pansenmist mit hohem Feuchtigkeitsgehalt bis zu 80 Vol. % und im obigen Rahmen entsprechend erhöhtem Anteil der Zuschlagstoffe möglich.

Eine Weiterbildung des erfindungsgemäßen Verfahrens sieht vor, die Feinanteile des Düngers nach der allfälligen Nachrotte in Wasser aufzuschlämmen, die Lösung mit den Schwebestoffen von den Feststoffen zu trennen und als Flüssigdünger zu verwenden und die verbleibenden Feststoffe vorzugsweise neuerlich der Kompostierung zuzuführen.

### Ausführungsbeispiel:

Frischer Pansenmist wird gepreßt, so daß ein Teil der in ihm enthaltenden Flüssigkeit abgeschieden und der Feuchtigkeitsgehalt auf etwa 60 Vo. % eingestellt wird. Dieser Pansenmist wird mit Hilfe eines Frontladers auf einen Stallmiststreuer geladen, wobei auf 6 Volumsanteile Pansenmist 3 Volumsanteil Sägemehl oder Strohhäcksel und 1 Volumsanteil Schlämmsand zugesetzt werden. Nach der Beladung des Stallmiststreuers wird das aufgebrachte Gut mittels des Streuers in einer Halle vorzugsweise in mehreren Schichten zu 1,50 m hohen Mieten abgelagert. Die Breite der Mieten ist an sich beliebig, ihre Länge richtet sich ebenso wie die Breite nach dem vorhandenen Material und dem Platzangebot in der Halle. Bereits nach einigen Stunden setzt eine merkliche Temperaturerhöhung in der Miete ein, wobei Wasserdampf bzw. Wasser ausgetrieben werden. Schließlich werden Gärtemperaturen bis zu 70°C erreicht. Die Mieten werden wöchentlich durch Aufladen auf den Düngerstreuer und neuerliche Absetzung umgesetzt. Im Sommer ist die Kompostierung nach etwa 2 Monaten abgeschlossen. Im Winter bei entsprechend niedrigen Temperaturen in der Halle dauert die Kompostierung um 2 bis 3 Wochen länger. Das Ende der Kompostierung kann durch Temperaturmessung festgestellt werden, da nach Beendigung der Gärung eine Auskühlung stattfindet. Nun wird das Material mit einem Sieb, das eine Maschenweite von 2 cm aufweist gesiebt. Die groben Siebrückstände werden bei einer Neukompostierung von frischem Pansenmist eingesetzt, der ausgesiebte Dünger ist an sich fertig und kann gegebenenfalls einer Nachrotte im Trockenen unterzogen werden. Der nun getrocknete Dünger kann als hochwertiger organischer Dünger eingesetzt werden, wobei der Dünger als Kopfdünger direkt verwendbar ist, gegebenenfalls aber auch mit anderen Materialien, z. B. Klärschlamm oder Torf zu einem Mischdünger vermischt werden kann. Eine weitere Anwendungsmöglichkeit besteht darin, den erhaltenen Dünger mit Wasser auszulaugen, die Lauge als Flüssigdünger einzusetzen und die Rückstände wieder bei einer Kompostierung zu verwenden.

An stelle eines Düngerstreuers können selbstverständlich auch andere Förder- und Zerkleinerungseinrichtungen bzw. Umsetzeinrichtungen für die Mieten verwendet werden, wie sie an sich in größeren Kompostierungsanlagen bekannt bzw. bei der jeweiligen Kompostierungsanlage verfügbar sind.

## Patentansprüche

1. Verfahren zum Herstellen von hochwertigem Dünger aus Pansenmist, bei dem der Pansenmist zerkleinert, mit verrottbarem, organischem Material und mit anorganischem, sandartigem Material, vermischt und anschließend in Mieten bei mehrfacher, insbesondere wöchentlicher Umsetzung einer Kompostierung unterzogen wird, wobei als aufsaugend wirkendes, verrottbares Material Sägemehl und/oder Strohhäcksel und feinkörniger Sand, insbesondere Schlämm- oder Flußsand verwendet werden, der nur grob zerkleinerte Pansenmist mit dem verrottbaren Material und dem Sand im Volumsverhältnis von etwa 9:3:1 bis 6:3:1 vermischt und in den Mieten ohne Zwangsbelüftung der Kompostierung unterzogen wird und nach Beendigung der Kompostierung eine Siebung vorgenommen wird, die Feinanteile aus dieser Siebung nach einer allfälligen Nachrotte im Trockenen als fertiger Dünger verwendbar und die Grobanteile bei einer neuerlichen Kompostierung einsetzbar sind.

2. Verfahren nach Anspruch 1, dadurch gekennzeichnet, daß als feinkörniger Sand als Abfall in Kies- und Sandgewinnungsanlagen anfallender Schlämmsand mit Korngrößen unter 1 mm verwendet wird.

3. Verfahren nach den Ansprüchen 1 und 2, dadurch gekennzeichnet, daß dem Sandanteil 10 bis 20 Vol. % bezogen auf die Sandmenge Steinmehl zugesetzt werden.

4. Verfahren nach einem der Ansprüche 1 bis 3, dadurch gekennzeichnet, daß die Siebung mit einem eine Maschenweite von etwa 2 cm aufweisenden Sieb vorgenommen wird.

5. Verfahren nach einem der Ansprüche 1 bis 4, dadurch gekennzeichnet, daß die Feinanteile des Düngers nach der Siebung bzw. Nachrotte in Wasser aufgeschlämmt und die Lösung mit den Schwebestoffen von den Feststoffen getrennt als Flüssigdünger verwendet wird, wogegen die Feststoffe neuerlich der Kompostierung zugeführt werden können.

## Claims

1. A process for the preparation of high-grade fertiliser from rumen waste product, in which the rumen waste product is comminuted, mixed with rottable organic material and with inorganic sand-like material, and then subjected to composting in stacks with repeated, more particularly weekly, transpositioning, sawdust and/or chopped straw and fine-grain sand, more particularly precipitated sand or river sand, being used as rottable material having an absorbent action, the only coarsely comminuted rumen waste product being mixed with the rottable material and the sand in proportions of about 9 : 3 : 1 to 6 : 3 : 1 by volume, and being subjected to the composting in the stacks without forced ventilation and after completion of the composting screening is effected, the fine fractions from this screening being usable after eventual after-rotting in the dry state as a finished fertiliser and the coarse fractions being usable for renewed composting.

2. A process according to claim 1, characterised in that the fine-grain sand used is precipitated sand having grain sizes below 1 mm and obtained as waste in gravel and sand production installations.

3. A process according to claims 1 and 2, characterised in that stone dust is added to the sand fraction in a proportion of 10 to 20% by volume based on the quantity of sand.

4. A process according to any one of claims 1 to 3, characterised in that screening is effected with a screen having a mesh width of about 2 cm.

5. A process according to any one of claims 1 to 4, characterised in that after screening or after-rotting the fine fractions of the fertiliser are suspended in water and the solution with the suspended substances is used separately from the solids as a liquid fertiliser whereas the solids can be recycled to composting.

## Revendications

1. Procédé de fabrication d'engrais de haute qualité à partir de déchets de panses, dans lequel les déchets de panses sont broyés, mélangés à un matériau organique décomposable et à un matériau minéral sableux, puis soumis à compostage, en formant des meules, avec plusieurs retournements, en particulier hebdomadaires, le matériau décomposable utilisé, à action aspirante, étant de la sciure et/ou de la paille hachée et du sable fin, en particulier un sable à base de boue ou un sable de rivière, les déchets de panses, encore seulement grossièrement broyés, étant mélangés au matériau décomposable et au sable en respectant une proportion volumétrique d'à peu près 9 : 3 : 1 à 6 : 3 : 1 et étant soumis au compostage dans les meules, sans aération forcée, et un tamisage étant effectué une fois le compostage achevé, les fines provenant du tamisage étant utilisables à titre d'engrais fini, après une éventuelle remise en décomposition à l'état sec, et les grosses étant utilisables lors d'un nouveau compostage.

2. Procédé selon la revendication 1, caractérisé en ce que l'on utilise comme sable fin, du sable à base de boue produit comme déchet dans les installations de récupération de gravier et de sable, avec des granulométries inférieures à 1 mm.

3. Procédé selon les revendications 1 et 2, caractérisé en ce que l'on ajoute de la fine de roche à la fraction de sable, dans une proportion de 10 à 20 % en volume par rapport à la quantité de sable.

4. Procédé selon l'une des revendications 1 à 3,
caractérisé en ce que le tamisage est effectué au moyen d'un tamis présentant une grandeur de maille d'à peu près 2 cm.

5. Procédé selon l'une des revendications 1 à 4, caractérisé en ce que les proportion de fines dans l'engrais, après tamisage ou remise en décomposition, sont agglomérées par immersion dans l'eau et la solution contenant les substances flottantes, débarrassée des solides, est utilisée comme engrais liquide, alors que, par contre, les solides peuvent de nouveau être amenés au compostage.
